# EUROPEAN PATENT APPLICATION

(11) **EP 1 327 951 A1**
(43) Date of publication of application: **16.07.2003**
(21) Application number: 02100008.8
(22) Date of filing: 14.01.2002
(51) Int. Cl.: G06F 17/60, G06F 11/30

(54) **method and apparatus for on demand certificate revocation updates**

(30) Priority: 25.01.2001 US 768304
(71) Applicant: AT&T Corp., New York, NY 10013-2412 (US)
(72) Inventor: MCDANIEL, Patrick, Drew, Ann Arbor, MI 48105 (US); RUBIN, Aviel, D, West Caldwell, NJ 07006 (US)
(74) Representative: Asquith, Julian Peter

(57) **Abstract**

A method of distributing revocation state information includes receiving first update scheduling information from a first party, and sending digital certificate revocation state information to the first party according to a schedule that is based on the first update scheduling information.

## Description

### Field of the Invention

The present invention relates to digital certificate management. More particularly, embodiments of the present invention relate to methods and apparatus to distribute certificate revocation state information.

### Background

The growth of electronic business relies on the ability to provide secure electronic transmissions. Public key infrastructure (PKI) is one system that may be used to provide message security. A public key infrastructure is a system in which certificate authorities (CAs) issue signed digital certificates that may be used to verify and authenticate the identity of the parties to an electronic transaction.

A certificate authority is a third-party organization that issues digital certificates ("certificates") to entities who subscribe to the certificate authority. An example of a certificate authority is VeriSign, Inc., of Mountain View, California. An individual may subscribe to multiple certificate authorities and may obtain multiple certificates from a single certificate authority. When an individual subscribes to a certificate authority, the certificate authority verifies the subscriber's identify, generates a digital certificate, digitally signs the certificate, and sends it to the subscriber. The subscriber may transmit the certificate when conducting a transaction with an electronic service that is accessed over, for example, the Internet or an intranet. The service ("verifier") may then use the digital certificate to verify the identity of the subscriber and to obtain the subscriber's public key. A verifier may accept digital certificates of one or more certificate authorities.

Verifiers may not wish to rely on a certificate if the certificate has been revoked by a certificate authority. Certificates may be revoked for any of numerous reasons such as, for example, the certificate authority becoming aware that a subscriber's private key was compromised or that a subscriber has changed her affiliation. Each certificate authority may maintain revocation state information on the certificates it makes available to verifiers. Before a verifier relies on a certificate, the verifier should check the certificate authority's revocation state information to ensure that the certificate is still fresh (i.e., has not been revoked). One mechanism for distributing certificate revocation state information to verifiers and other certificate users is a certificate revocation list (CRL), which may be generated and digitally signed by a certificate authority. A CRL may contain information that identifies all unexpired certificates that have been revoked by the certificate authority. CRLs may also contain other information, such as the time that the list was generated, the name of the certificate authority, and the time of the next update.

CRLs and other certificate revocation state information may be distributed to verifiers and other certificate users by a variety of methods. The verifier may poll the certificate authority for the certificate revocation state information. When using this method, a verifier that needs to check the freshness of a certificate may access a data repository maintained by the certificate authority and poll it for the latest certificate revocation state. According to a similar method, the verifier may initiate an on-line status query with a certificate authority to determine the validity of the certificate. To ensure the validity of a certificate, the verifier may need to make such a status query each time that the freshness of the certificate needs to be determined, which may mean that a query needs to be made each time that an electronic transaction is initiated. According to another method for distributing certificate revocation state information, a certificate authority may push revocation information to verifiers each time that a certificate is revoked. Similarly, according to another method, certificate authorities may push certificate revocation state to all verifiers at a given time interval which is determined by the certificate authority.

It would be advantageous to have a method and apparatus for distributing revocation state information that removed the certificate verification process from the critical path of the transactions and that distributed certificate revocation state information according to the needs of the verifiers.

### Summary of the Invention

The present invention provides methods and apparatus to distribute certificate revocation state information. In an embodiment, update scheduling information is received from a party such as a certificate verifier. Digital certificate revocation state information is sent to the party according to a schedule that is based on the received update scheduling information.

### Brief Description of the Drawings

FIG. 1 is a block diagram of a system for authenticating subscribers which includes distributing certificate revocation state information in accordance with an embodiment of the present invention.
FIG. 2 is a block diagram of a system for a certificate authority in accordance with an embodiment of the present invention.
FIG. 3 is a flow diagram of a method for distributing digital certificate revocation state information in accordance with an embodiment of the present invention.

### Detailed Description

The present invention provides methods and apparatus to distribute certificate revocation state information. Embodiments of the present efficiently allow verifiers to determine how often the verifier receives updates of certificate revocation state information. Risk among services may not be uniform, and some verifiers may therefore have stronger timeliness requirements. Because services (verifiers) may be visited frequently, there is economic motivation for reducing the latency of the certification validation process. According to embodiments of the present invention, the timeliness can be tailored to meet the differing requirements of many verifiers simultaneously. In addition, using the publish/ subscribe revocation on demand mechanism of the present invention, certificate revocation lists may be generated and delivered to a limited number of verifiers with minimal latency. Embodiments of the present invention may be particularly advantageous in a system that exhibits reference locality, such as an intranet that has a relatively small number of certificate authorities and verifiers.

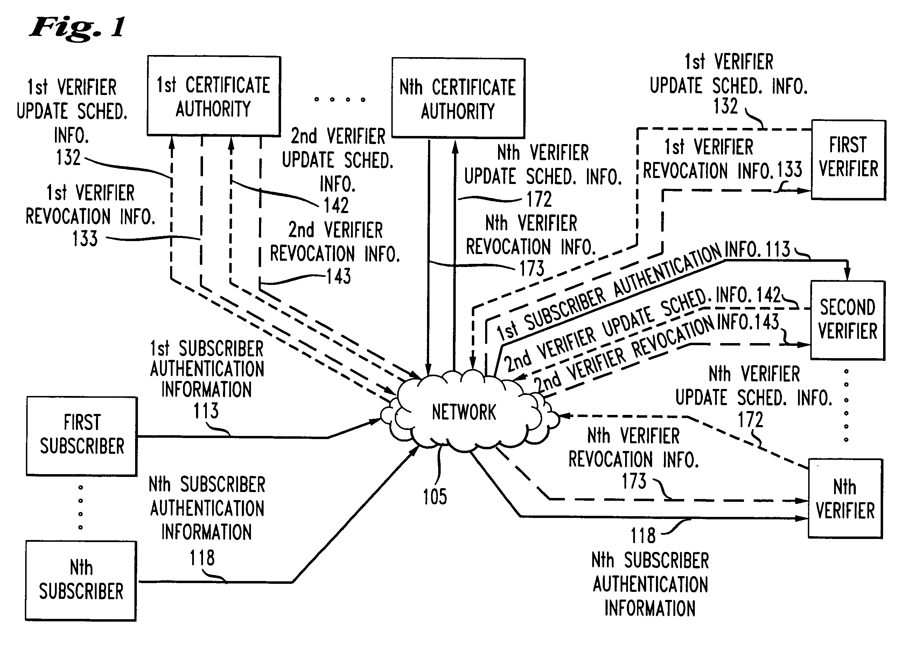

FIG. 1 is a block diagram of a system for authenticating subscribers which includes distributing certificate revocation state information in accordance with an embodiment of the present invention. System 100 contains a plurality of N subscribers (111, 117) that are coupled to both a plurality of N verifiers (131, 141, 171) and to a plurality of N certificate authorities (120, 127) over a network 105. The N certificate authorities are also coupled to the N verifiers over network 105. The term "coupled" encompasses a direct connection, an indirect connection, in indirect communication, etc.

According to an embodiment of the present invention, the subscribers conduct transactions with verifiers over network 105. As part of a transaction, the verifiers may receive authentication information (113, 118) such as a digital certificate from subscribers with whom the verifier is conducting the transaction. The verifier may use the digital certificate to verify the identity of the subscriber and acquire the subscriber's public key. In doing so, the verifiers may use certificate revocation state information (133, 143, 173) received from the relevant certificate authority to determine if the digital certificate received from the subscriber is fresh (i.e., has not been revoked). The revocation state information may be in the form of a certificate revocation list. According to an embodiment of the present invention, revocation state information is transmitted by certificate authorities to the verifiers on a schedule that is based on verifier update scheduling information (132, 142, 172) that is provided to the certificate authorities by each verifier.

Network 105 may be any information systems network across which information may be sent. Examples of the network 105 include a wireline telephone network, a wireless telephone network, the Internet, an intranet, a virtual private network, or any combination of these devices. In an embodiment, network 105 may be a plurality of networks, and the entities may be coupled to one another over different networks. For example, subscribers may be coupled to the verifiers over a different network than that which couples the verifiers to the certificate authorities. In a further embodiment, individual subscribers may be coupled to verifiers over different networks than other subscribers, individual verifiers may be coupled to certificate authorities over different networks than other verifiers, etc.

FIG. 1 shows two subscribers (first subscriber 111 and Nth subscriber 117) that represent a plurality of subscribers. The subscribers may be devices operated by persons who subscribe to a certificate authority, such as first certificate authority 120 and Nth certificate authority 127, and who wish to use services provided by a service, such as first verifier 131, second verifier 141, or Nth verifier 171. The subscribers may be any types of devices capable of communicating over network 105. First subscriber 111 and Nth subscriber 117 may be personal computers that contain a processor and a memory which stores browser software. For example, first subscriber 111 may be a personal computer that browses the World Wide Web using software such as MICROSOFT INTERNET EXPLORER or NETSCAPE NAVIGATOR. In another embodiment, a subscriber may be a dedicated network browser terminal (e.g., a set-top box). First subscriber 111 may be a different type of device than Nth subscriber 117 and may communicate over network 105 using a different protocol or different type of software. In an embodiment, network 105 is an intranet for a corporation and the subscribers are employees of the corporation who have access to the intranet. In another embodiment, network 105 is a virtual private network which is used by, for example, an association and first subscriber 111 and Nth subscriber 117 are members of the association. System 100 may contain any number of subscribers, and in an embodiment has over 100,000 subscribers.

FIG. 1 shows three verifiers (First verifier 131, second verifier 141, and Nth verifier 171) that represent a plurality of verifiers. The verifiers are parties to an electronic transaction who may provide services to clients (such as subscribers 111, 117) by conducting transactions with the clients over network 105. The verifiers provide useful content to clients (also known as principals) within the network. Before being allowed access to service content, the clients may authenticate themselves by providing the verifier with authentication information (e.g., a digital certificate). The verifiers may each be computing devices. For example, first verifier 131, second verifier 141, and Nth verifier 171 each may be network servers made by the Hewlett-Packard Company. The verifiers may each contain multiple computers, such as a network server and a data base server, and may contain a network of computers. First verifier 131, second verifier 141, and Nth verifier 171 may contain general purpose microprocessors and/or application specific integrated circuits (ASIC) which have been specifically designed to perform at least part of the processing of transactions and verifying of subscriber authentication in accordance with an embodiment of the present invention. The verifiers may contain software that performs at least part of processing transactions over network 105 and verifying subscriber authentication in accordance with an embodiment of the present invention. First verifier 131, second verifier 141, and Nth verifier 171 may each contain the same components or may contain different components. In one embodiment, multiple verifiers are resident on the same computer system.

Using the example provided above, where network 105 is a corporate intranet, the verifiers may provide services to employees of the corporation. For example, first verifier 131 may provide room scheduling services, second verifier 141 may provide payroll services, and Nth verifier 171 may provide purchasing services to employees of the corporation. Thus, if an employee (e.g., first subscriber 111) wishes to change the address to which his paycheck is mailed, he may make these change by communicating this information over network 105 to a service (such as verifier 141). In another embodiment, system 100 may be the Internet and the verifiers may be electronic businesses such as AMAZON.COM or FOGDOG.COM. System 100 may contain any number of verifiers, and in one embodiment has ten verifiers.

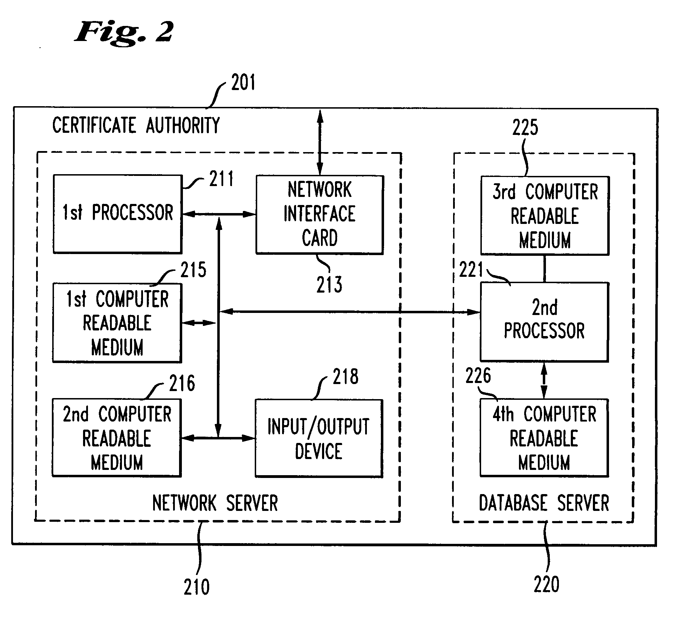

FIG. 1 shows two certificate authorities (first certificate authority 120 and Nth certificate authority 127) that represent a plurality of certificate authorities. The certificate authorities may each be computing devices that are programmed to, among other things, generate and provide digital certificates and certificate revocation information. Nth certificate authority 127 may use the same type of hardware and/or software system as first certificate authority 120, or Nth certificate authority 127 may use a different type of hardware and/or software system than first certificate authority 120. First certificate authority 120 may be similar to, for example, the VeriSign, Inc., certificate authority. In a further embodiment, first certificate authority 120 is a local registration authority. In another embodiment, first certificate authority 120 may be similar to either the TrustedCa system from Secure Solutions Experts of Dublin, Ireland, the World Registry system from International Business Machines Corporation of Armonk, New York, the CyberTrust system from GTE Corporation of Irving, Texas, the Entrust system from Nortel Networks Corporation of Brampton, Ontario, etc. In an embodiment, multiple certificate authorities are resident on the same computer system. In another embodiment, a certificate authority may be responsible for issuing certificates (i.e., a registration authority), responsible for distributing certificates, and responsible for distributing revocation information (i.e., a revocation authority). In an embodiment, all of these functions can be carried out on one or more machines with potentially different authenticating certificates. An embodiment of a certificate authority system is discussed below with reference to FIG. 2.

The certificate authorities may generate and provide digital certificates to subscribers (such as first subscriber 111 and Nth subscriber 117). According to an embodiment, an individual or entity that has access to network 105 and that wishes to obtain a digital certificate may subscribe to one of the certificate authorities. For example, first subscriber 111 may send a subscription request (not shown in FIG. 1) to Nth certificate authority 127 over network 105. Certificate authority 127 may verify the subscriber's identify, generate a digital certificate (not shown in FIG. 1), digitally sign the certificate, and send it to subscriber 111. The digital certificate may contain information such as the name of the subscriber, the subscriber's public key information, and the validity period of the certificate. The subscription process may also be referred to as certificate enrollment.

In an embodiment, certificate authority 120 may generate and provide digital certificates that conform to the X.509 standard, which was proposed by and is available from the International Telecommunication Union (ITU) as "Recommendation X.509 (08/97) - Information technology - Open Systems Interconnection - The Directory: Authentication framework." According to this embodiment, each digital certificate contains a version number, a serial number, a signature algorithm identifier, an issuer name, a validity period, a subscriber name, subscriber public key information, an issuer unique identifier, a subscriber unique identifier, and may also contain one or more extension fields. In another embodiment, the digital certificates may use another standard.

An individual or entity may subscribe to one or more certificate authorities, and may obtain one or more certificates from any single certificate authority. For example, first subscriber 120 may subscribe to, and obtain a digital certificate from, first certificate authority 120 and Nth certificate authority 127. Each certificate authority may have multiple subscribers. In one embodiment, first certificate authority 120 and Nth certificate authority 127 each have over 10,000 subscribers. A subscribe may also be referred to as the principal for a certificate or the subject of a certificate.

In system 100, the verifiers (131, 141, 171) are certificate-using entities. In particular, a verifier uses a certificate to verify the identity of a subscriber and to obtain the subscriber's public key. Such a verification is particularly important if the transaction involves sensitive or valuable information. A verifier should become associated with a particular certificate authority before the verifier can use certificates from that authority. A verifier may be associated with one or more certificate authorities. In one embodiment, the first verifier 131 and second verifier 141 are associated only with the first certificate authority 120, and Nth verifier 171 is associated only with Nth certificate authority 127. In this embodiment, a subscriber (e.g., first subscriber 111) subscribes to, and obtains a certificate from, first certificate authority 120 in order to conduct a transaction with first verifier 131 or second verifier 141 if that transaction requires a digital certificate. A certificate authority may be associated with one or more verifiers. In another embodiment, the verifiers in system 100 are associated with all of the certificate authorities available in system 100.

Using the example above, first subscriber 111 may be an employee of a corporation who contacts second verifier 141 (a payroll services provider) in order to change the address to which the subscriber's paycheck is mailed. As part of this transaction, second verifier 141 may verify the identity and obtain the public key of first subscriber 111. To provide this information, first subscriber 111 may send first subscriber authentication information 113 through network 105 to second verifier 141, as shown in FIG. 1. First subscriber authentication information 113 may include the first subscriber's digital certificate, which may have been issued at some earlier time by the first certificate authority 120. Similarly, Nth subscriber 118 may wish to purchase an item using Nth verifier 171, which provides purchasing services. As part of this transaction, Nth subscriber 117 may send Nth subscriber authentication information 117 through network 105 to Nth verifier 171. Nth subscriber authentication information 118 may include the Nth subscriber's digital certificate, which may have been issued at some earlier time by the second certificate authority 127. In this example, before second verifier 131 and Nth verifier 171 rely on digital certificates received, second verifier 131 and Nth verifier 171 may attempt to determine if the digital certificates have been revoked. In an embodiment, second verifier 131 and Nth verifier 171 may determine if a digital certificate was revoked by checking revocation state information provided by first certificate authority 120 and Nth certificate authority 127. The revocation state information may be, or may include, a certificate revocation list.

In an embodiment of the present invention, certificate revocation authorities send certificate revocation state information to associated verifiers according to a schedule that is based on update scheduling information provided by each of the associated verifiers. Update scheduling information may be provided by the verifier in conjunction with the verifier becoming associated with the certificate authority (i.e., during the verifier subscription process) or at some latter time. FIG. 1 shows first verifier 131 transmitting first verifier update scheduling information 132 to first certificate authority 127 through network 105. In addition, FIG. 1 also shows second verifier 141 transmitting second verifier update scheduling information 142 to first certificate authority 120 through network 105, and Nth verifier 171 transmitting Nth verifier update scheduling information 172 to Nth certificate authority 127 through network 105.

A verifier may provide update scheduling information to each certificate authority with which it is associated so that the associated certificate authorities are able to determine the schedule by which the verifier wishes to be updated. In the embodiment shown in FIG. 1, the first verifier 131 and second verifier 141 are associated with the first certificate authority 120, and the Nth verifier 171 is associated with the Nth certificate authority 127. In another embodiment, all of the verifiers are associated with and provide update scheduling information to all of the certificate authorities.

The update scheduling information may be transmitted in any form permissible over network 105. For example, update scheduling information may be sent as part of an email (SMPT protocol), though a web browser, a file transfer protocol (FTP), an email, tftp, etc. In an embodiment, the update scheduling information is sent by a separate network than subscriber authentication information and/or verifier revocation information. In a further embodiment, update scheduling information be sent be a non-electronic means (e.g., paper mail). For example, the update scheduling information may be specified in a contract prior to receiving update information. In another embodiment, the update scheduling information is known a priori and may be based on some characteristic of the verifier, such as for example a domain name. In a further embodiment, the update scheduling information is adaptive and may be based, for example, on the available CA resources, time of day, or other environmental property. In other embodiments, these approaches could be combined. For example, in a broker environment, open subscriptions may be sent during trading hours, but some globally accepted subscription may be assumed for all verifiers during non-trading hours. In another embodiment, a verifier may change the update scheduling information by sending new update scheduling information to a certificate authority. To make such a change, a verifier may send new update scheduling information to all certificate authorities with which it is associated. The update scheduling information may be sent to all associated certificate authorities at the same time or at different times. In a further embodiment, a verifier may change its update scheduling information at any time, but the verifier changes this information infrequently (if at all).

Update scheduling information may include a verifier identification number and a update rate (e.g., every 10 minutes, every 1 minute, every 5 seconds). The update rate may be expressed in units of time or in any other form from which a schedule may be derived. For example, the update rate may be expressed as an option on a predetermined scale (e.g., 1 = every day/ 2 = every 12 hours/ 3 = every hour/ etc.). In an embodiment, the scheduling information includes an address to which the verifier wants revocation information to be sent. This can be specified as unicast, anycast, broadcast, or other address types. The update information may also include other data items, such as the key length of the signing authority and other parameters that are used.

After a certificate authority receives update scheduling information, it may use this information to determine a schedule by which it sends certificate revocation information to the verifier. For example, when first certificate authority 120 receives first verifier update scheduling information 132 (from the first verifier 131) and second verifier update scheduling information 142 (from second verifier 141), it may store this information and may record how often revocation information is to be sent to the first verifier 131 and second verifier 141. The first certificate authority 120 may send first verifier revocation information 133 to first verifier 131 according to a schedule based on the information contained in first verifier update scheduling information 132. For example, if the first verifier 131 requested to receive an update of the revocation information every minute, then first certificate authority 120 may send first verifier revocation information 133 to first verifier 131 every minute. Thus, first verifier revocation information 133 may be sent at the end of the first minute, at the end of the second minute, at the end of the third minute, etc. First certificate authority 120 may send second verifier revocation information 143 to second verifier 141 according to a schedule based on the information contain in second verifier update scheduling information 142. Similarly, Nth certificate authority 127 may send Nth verifier revocation information 173 to Nth verifier 171 according to the schedule specified in Nth verifier update scheduling information 172. The schedule for each verifier may be different, and two or more verifiers may request that information be provided to it according to the same schedule. For example, first verifier revocation information 133 may be sent every one minute, second verifier revocation information 143 may be sent every fifteen seconds, and Nth verifier revocation information 173 may be sent every ten seconds.

Verifier revocation information (133, 143, 173) may be a certificate revocation list. In an embodiment, verifier revocation information includes a certificate revocation list in addition to other information. The certificate revocation list may be digitally signed by the certificate authority by the same key or a different key than is used to sign the certificates issued by that authority. In an embodiment, verifier revocation information is a certification revocation list that has the form specified in the X.509 standard. In this embodiment, the certificate revocation list may contain: a version field that specifies which version of the standard being used, a signature field that specifies an identifier for the algorithm used to sign the certificate revocation list, an issuer (CA) name, the data and time that the certificate revocation list was generated, the date and time that the next certificate revocation list will be updated, a list of certificate serial numbers for revoked certificates, and the effective date of the revocations. In an embodiment, the verifier revocation information sent in a different formation by different certificate authorities.

According to one embodiment, the certificate authority generates certificate revocation lists whenever it determines that an update to any of the associated verifiers is scheduled. According to another embodiment, the certificate authority generates certificate revocation information on an ongoing basis (e.g., every second) regardless of whether an update is scheduled for that time. For example, the certificate authority may continuously update a certificate revocation list. In this embodiment, when the certificate authority determines that an update to any of the associated verifiers is scheduled, the certificate authority may capture the state of the certificate revocation list and transmit the captured information to the relevant verifiers.

In an embodiment, the revocation information contains a delta-certificate revocation list, which includes only those certificates that have been revoked during a certain time period (e.g., the past week). In this embodiment, infrequently generated base CRLs which contain a more a complete list are distributed, in addition to more frequently generated delta-CRLs that indicate only those certificates that have been revoked since the last base CRL. In this embodiment, the list may contain few if any certificates at any particular time. In another embodiment, the revocation information contains a complete list of unexpired, revoked certificates.

A certificate authority may revoke a certificate at any time. Thus, if a verifier only receives an update every minute, when it performs certificate verification using the last revocation information received there will on average be a 30 second window of time during which the certificate may have been revoked without notice to the verifier. A verifier may determine a desired update rate based upon the potential cost of reliance on a revoked certificate. The transaction value determines the amount of risk involved. For example, if the verifier is performing the service of scheduling rooms, this may be considered to be a low value transaction and the cost of reliance on a revoked certificate is low. In this case, the verifier may request revocation updates every hour. However, if the verifier is to transfer a vast sum of money or valuable assets, the cost of reliance on a revoked certificate is large and the verifier may request frequent updates of the revocation information (e.g., every second). Because each individual verifier is in the best position to know how much risk it can tolerate, each verifier is in the best position to determine how often it should receive certificate revocation information. In one embodiment, the certificate authority charges verifiers a higher fee for more frequent updates.

In a further embodiment, the verifier may delay verification until the verifier receives the next update of the revocation information if the transaction is associated with a value that is above a predetermined threshold level. For example, a verifier may handle some transactions that involve sensitive messages, which therefore could be associated with a high sensitivity value, as well as transactions that do not involve sensitive messages. The certificate authority may only schedule CRL updates at a level appropriate for low value transactions. If the certificate authority is involved in a transaction (e.g., the purchase of securities) associated with a value that is above a pre-determined threshold, the certificate authority may wait for the next or later update of the certificate revocation state information before validating the certificate. In an embodiment, a higher bit-length is used for the signing keys for higher value transactions.

The present invention provides scaleable certificate revocation which may be referred to as revocation on demand in that the information is provided on a schedule requested by the verifiers. In an embodiment, all of the subscribers exist within a single administrative domain, and the certificates may be serviced by a small number of certificate authorities. In an embodiment, there are a small number of verifiers and fewer certificate authorities. In certain situations, such as that discussed above, the certificates exhibit reference locality. Recent revocation state information for many certificates may be obtained simultaneously, and the obtained revocation state information is likely to be useful over many transactions.

In another embodiment, the time period over which the certificate is reported may be limited. In a still further embodiment, CRL's may be delivered using multicasting. In this embodiment, a tiered quality service approach may be used to provide channels delivering CRLs at several rates. The protocols may be configured to compensate for unreliableness of the multicasting.

FIG. 2 is a block diagram of a system for a certificate authority in accordance with an embodiment of the present invention. FIG. 2 shows certificate authority 201, which may be the same as first certificate authority 120 or Nth certificate authority 127 of FIG. 1. In this embodiment, certificate authority 201 contains a network server 210 coupled to a database server 220. In other embodiments, certificate authority 201 may contain a single server or more than two servers. In still other embodiments, certificate authority 120 may be any other type of computing device. Network server 210 may be coupled to database server 220 through a network.

FIG. 2 shows network server 210 as containing a first processor 211, network interface card 213, first computer readable medium 215, second computer readable medium 216, and an input/output device 218 each of which is coupled to a bus 212. In other embodiments, network server 210 may contain a subset of these components or may contain additional components. In an embodiment, first processor 211 is an Application Specific Integrated Circuit, which has been specifically designed to perform at least some of the steps of the method in accordance with an embodiment of the present invention. In another embodiment, processor 211 may be a general purpose microprocessor, such as a PENTIUM class microprocessor manufactured by the Intel Corporation of Santa Clara, California. First computer readable medium 215 and second computer readable medium 216 each may be memory devices such as a Random Access Memory (RAM), a hard disk, a floppy disk, an optical digital storage medium, or any combination thereof. In an embodiment, first computer readable medium 215 is a RAM and second computer readable medium 216 is a hard drive. In a further embodiment, second computer readable medium 216 stores instructions adapted to be executed by first processor 211 to receive first update scheduling information from a first party, and send digital certificate revocation state information to the first party according to a schedule that is based on the first update scheduling information. In a still further embodiments, second computer readable medium 216 stores other instructions adapted to be executed by first processor 211 to, among other things, process subscription requests, generate digital certificates, and distribute certificate revocation information. Network interface card 213 may be coupled to a network such as network 105 of FIG. 1. Input/output device 218 may a device such as a video monitor, keyboard, mouse, printer, or some combination of these.

Database server 220 is shown in FIG. 2 as containing a second processor 221 coupled to a third computer readable medium 225 and a fourth computer readable medium 226. Second processor 221 may be an application specific microprocessor or a general purpose microprocessor. First computer readable medium 225 and second computer readable medium 226 each may be memory devices such as a Random Access Memory (RAM), a hard disk, a floppy disk, an optical digital storage medium, or any combination thereof. In an embodiment, first computer readable medium 225 is a RAM and second computer readable medium 226 is a hard drive. In a further embodiment, second computer readable medium 226 stores instructions adapted to be executed by second processor 221 to manage a database of digital certificates. The digital certificate information may be stored in any type of database structure.

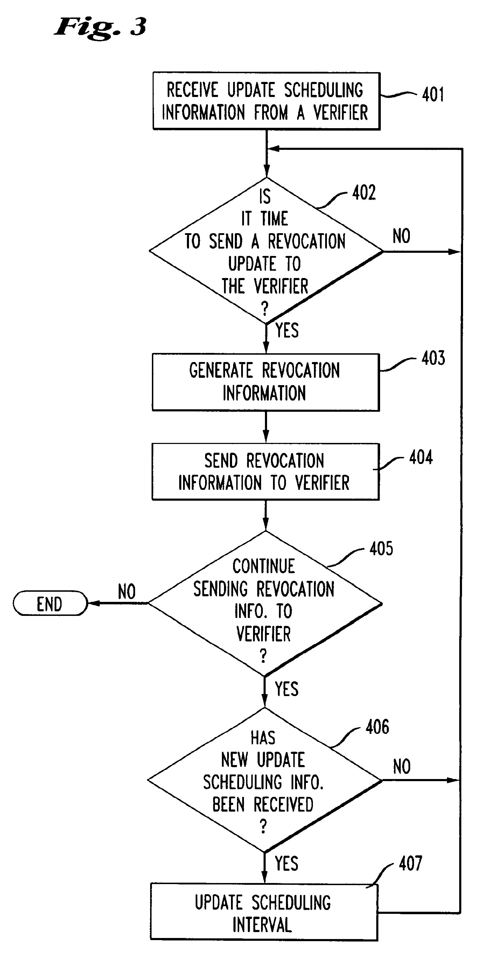

FIG. 3 is a flow diagram of a method for distributing digital certificate revocation state information in accordance with an embodiment of the present invention. A certificate authority may receive update scheduling information from a party such as a verifier (401). The certificate authority may then send digital certificate revocation state information to the party according to a schedule that is based on the update scheduling information. In particular, the certificate authority may use the update scheduling information to determine a schedule for sending revocation information to the verifier. At the occurrence of a time increment (e.g., every second), the certificate authority may check to see if, according to the schedule, it is time to send a revocation update to the verifier (402). If it is not time, then update information is not sent at that point. If it is time, the certificate authority may generate the revocation information (403). For example, the certificate authority may generate a certificate revocation list. In another embodiment, the certificate revocation information is generated regardless of whether an update is scheduled for that time. The revocation information may then be sent to the verifier (404). The certificate authority can then determine whether it should keep sending revocation information to the verifier (405). If, for example, the verifier has ended its association with the certificate authority, then the certificate authority may discontinue sending scheduled updates. If the certificate authority is to keep sending updates, then the certificate authority determines if new update scheduling information has been received from the verifier (406). If so, then the certificate authority updates the schedule for that verifier (407). The certificate authority may then wait for the next scheduled update time to occur.

In a further embodiment, the certificate authority receives first update scheduling information from a first verifier and second update scheduling information from a second verifier. In this embodiment, the revocation state information may be sent to the first verifier on a different schedule than it is sent to the second verifier. In a further embodiment, the certificate authority receives update scheduling information from any number of verifiers, and revocation state information may be sent to each verifier according to a different schedule. In an embodiment, the interval between sending of certificate revocation information to the first party is less then every thirty seconds. In another embodiment, the interval is less than every five seconds.

A verifier may use the certificate revocation information when verifying the validity of a certificate. In an embodiment, the verifier sends update scheduling information to a certificate authority and receives certificate revocation information from the certificate authority according to a schedule that is based on the update scheduling information. In an embodiment, the verifier uses certificate caching so that the certificates are saved and many transactions may be completed without the direct involvement of the certificate authority. Certificate caching relates to keeping a certificate in memory so that the certificate does not need to be fetched again. In a still further embodiment, the verifier receives a digital certificate from a subscriber and determines whether the digital certificate was revoked based on the received certificate revocation information. In an embodiment, the verifier will not authenticate a certificate unless it has received an update within a defined interval. In as still further embodiment, the verifier determines the update scheduling information that it sends based on a potential cost of reliance on a revoked certificate.

Several embodiments of the present invention are specifically illustrated and/or described herein. However, it will be appreciated that modifications and variations of the present invention are covered by the above teachings and within the purview of the appended claims without departing from the spirit and intended scope of the invention. For example, although embodiments disclosed provide that the certificate revocation information is sent as a certificate revocation list, this information may be sent in other formats. In addition, the phrase "instructions adapted to be executed by a processor" is meant to encompass source code, assembler, and any other expression of instructions that may require preprocessing in order to be executed by processor.

## Claims

1. A method of distributing revocation state information, the method comprising:
receiving first update scheduling information from a first party; and
sending digital certificate revocation state information to the first party according to a schedule that is based on the first update scheduling information

2. The method of claim 1, wherein the method further comprises:
receiving second update scheduling information from a second party; and
sending digital certificate revocation state information to the second party according to a schedule that is based on the second update scheduling information.

3. The method of claim 2, wherein the digital certificate revocation state information is sent to the first party on a different schedule than the digital certificate revocation state information is sent to the second party.

4. The method of claim 2, wherein the schedule provides that the digital certificate revocation state information is sent to the first party at an interval that is less than every 30 seconds.

5. The method of claim 2, wherein the schedule provides that the digital certificate revocation state information is sent to the first party at an interval that is less than every 5 seconds.

6. The method of claim 1, wherein the method further includes receiving new update scheduling information from the first party, and wherein when the new update scheduling information is received the digital certificate revocation state information is sent to the first party according to a schedule that is based on the new update scheduling information.

7. The method of claim 1, wherein the digital certificate revocation state information sent includes a certificate revocation list.

8. The method of claim 1, wherein the digital certificate revocation state information includes information identifying revoked certificates.

9. The method of claim 1, wherein the digital certificate revocation state information sent includes delta-certificate revocation list information.

10. The method of claim 1, wherein sending digital certificate revocation state information includes sending information using multicasting.

11. A method of distributing revocation state information, the method comprising:
receiving update scheduling information from a digital certificate verifier;
assembling certificate revocation information on an ongoing basis; and
capturing a state of the certificate revocation information as a certificate evocation list and transmitting the captured certificate revocation list to the digital certificate verifier on a schedule determined by the received update scheduling information.

12. The method of claim 11, wherein the captured certificate revocation list is transmitted using multicast broadcasts.

13. The method of claim 12, wherein the captured certificate revocation list is a delta-certificate revocation list.

14. The method of claim 11, wherein said update scheduling information is received during a verifier subscription process.

15. The method of claim 14, wherein the method further comprises receiving new update scheduling information from the verifier, and wherein the revocation state information is transmitted according to a schedule that is based on the new update scheduling information.

16. A method of verifying the validity of a certificate for a transaction, the method comprising:
sending update scheduling information to a certificate authority; and
receiving certificate revocation information from the certificate authority at scheduled times based on the update scheduling information at scheduled times.

17. The method of claim 16, wherein the method further comprises:
receiving a digital certificate from a subscriber; and
determining whether the digital certificate was revoked based on the received certificate revocation information.

18. The method of claim 16, wherein said sending update scheduling Information includes determining the update scheduling information based on a potential cost of reliance on a revoked certificate.

19. The method of claim 15, wherein the method further comprises:
receiving a digital certificate from a subscriber;
determining whether the transaction is associated with a value that is above a pre-determined threshold level; and
verifying the validity of the digital certificate after receiving a next update of certificate revocation information from the certificate authority.

20. An article of manufacture comprising a computer-readable medium having stored thereon instructions adapted to be executed by a processor, the0 instructions which, when executed, cause the processor to:
receive first update scheduling information from a first party; and
send digital certificate revocation state information to the first party according to a schedule that is based on the first update scheduling information.

21. The article of manufacture of claim 20, wherein the instructions stored on the computer-readable medium further include instructions adapted to be executed by a processor to:
receive second update scheduling information from a second party; and
sending digital certificate revocation state information to the second party according to a schedule that is based on the second update scheduling information.

22. The article of manufacture of claim 20, wherein the first interval is not equal to the second interval.

23. The article of manufacture of claim 20, wherein the instructions stored on the computer-readable medium further include instructions adapted to be executed by a processor to receive new update scheduling information from the first party, and wherein the digital certificate revocation state information is sent to the first party according to a schedule that is based on the new update scheduling information.

24. The article of manufacture of claim 20, wherein the digital certificate revocation state information sent includes delta-certificate revocation list information.
